# EUROPEAN PATENT SPECIFICATION

(11) **EP 2 573 887 B1**
(45) Date of publication and mention of the grant of the patent: **28.12.2016**
(21) Application number: 11783679.1
(22) Date of filing: 19.05.2011
(51) Int. Cl.: H01H 33/662, H02B 13/035, H02B 13/02, H01H 1/42, H02B 11/12

(54) **CUBICLE-TYPE GAS-INSULATED SWITCHGEAR**
GASISOLIERTE SCHALTSCHRANKANORDNUNG
APPAREILLAGE DE COMMUTATION ISOLÉ PAR GAZ DE TYPE ARMOIRE

(30) Priority: 20.05.2010 JP 2010115851
(43) Date of publication of application: 27.03.2013
(73) Proprietor: Meidensha Corporation, Tokyo 141-6029 (JP)
(72) Inventor: NAGATSUNA, Nozomu, Tokyo 141-6029 (JP); AGATA, Yuusuke, Tokyo 141-6029 (JP)
(74) Representative: Strehl Schübel-Hopf & Partner
(86) International application number: PCT/JP2011/062042
(87) International publication number: WO 2011/145749

(56) References cited:
- EP-A1- 0 412 368
- EP-A2- 1 921 646
- FR-A1- 2 735 914
- JP-U- 62 178 715
- JP-U- 62 178 716

## Description

### [TECHNICAL FIELD]

The present invention relates to a cubicle-type gas insulated switchgear particularly to such a cubicle-type gas insulated switchgear which has an improved arrangement around an interrupting part of a vacuum circuit breaker.

### [BACKGROUND ART]

In general, a cubicle-type gas insulated switchgear (hereinafter referred to as a C-GIS) uses a removable contact having tulip-shaped or finger-shaped construction as the connection means between the vacuum circuit breaker and the main circuit conductor.

This construction eases the placing and removing operation of the vacuum circuit breaker by a horizontal movement in mounting the vacuum circuit breaker into the Vacuum circuit breaker compartment (herein after referred to as a VCB compartment) of the C-GIS or in pulling out the vacuum circuit breaker out of the VCB compartment for maintenance of a vacuum valve (hereinafter referred to as a valve).

In the vacuum circuit breaker disclosed in JP 2010-22139 A1 (Patent Literature 1), the vacuum circuit breaker has a configuration including the main circuit connected to a contact vertically disposed to the longitudinal direction of the valve that forms an interrupting part.

In a conventional configuration as described in Patent Literature 1, the current flow path from the contact connected to one end of the valve to another contact connected to the other end of the valve via the valve forms a shape like a horizontal U-shape, or a horizontal channel-shape. This shape generates electromagnetic force in the horizontal direction to the current flow path when a large current flows.

This make the arc, which appears between the electrodes in the valve at the time of circuit breaking, unstable with occurrence of local concentration of arc on a limited part of the electrode, possibly accelerating electrode melt. Further, the tilting of the moving lead in the valve caused by electromagnetic force at the time of electrode parting causes so-called one-side contacting which means a contacting between the surfaces of the each part of the electrode at the time of their closing movement. Such one-side contacting may damage the electrodes or reduce the contact area between the electrodes, which has brought anxiety about an adverse effect on the interruption performance.

Further, the main circuit conductor led from the contact needs to be routed in such a manner that the conductor leaves the contact in the horizontal direction and then turns toward vertical direction when forming the connection to the bus bar chamber or to the disconnecting switch in the equipment room. Therefore, the main circuit conductor unavoidably has a bend section thereon, at which intensity concentration of electric field will appear. As a consequence of this, it is required to enlarge the insulation distance with such a problem that size of a C-GIS grows.

A similar construction is shown in EP 0 412 368 A1. This document forms the basis for the two-part form of present claim 1.

The object of the present invention is to provide a C-GIS which can be downsized, particularly in the depth direction, and which still has an excellent interruption performance in which electromagnetic force that affects the arc which appears on circuit breaking or affects the moving lead in the valve is suppressed to a minimum for prevention of damage of electrodes and for enhancement of interruption performance with reduced intensity concentration of electric field on the main circuit conductor.

### [DISCLOSURE OF INVENTION]

The above object is met by the switchgear defined in claim 1.

It is preferable that each of the plate-shaped contacts is secured severally on an upper shielding valve-terminal and a lower shielding valve-terminal that are installed on the upper and the lower ends of the vacuum valve respectively;
each of the finger contacts is connected electrically to each of the respective main circuit conductors;
each of the plate-shaped contacts and each of the finger contacts are disposed so that they position within the upper shielding valve-terminal and within the lower shielding valve-terminal respectively on completion of making fit-connection.

### [ADVANTAGES OF INVENTION]

In the C-GIS by the present invention, the current flow paths around the valve are straight in the route configuration. This is rendered by such a configuration that each of the longitudinal axis lines: of the plate-shaped contacts connected to the upper and the lower ends of the valve, of the finger contacts, and of the main circuit conductors connected to the disconnecting switches in the bus bar compartment and the VCB compartment are located near the extension line of axis of a pair of leads in the vacuum valve. Thereby, the electromagnetic force that produces uneven arc distribution is reduced in its intensity by about 20 % compared to conventional structures, which suppresses occurrence of electrode damage attributable to arc concentration. Further, the tilting of the moving lead in the valve caused by electromagnetic force is reduced; thereby, electrode damage for which the one-side contacting is responsible and the reduction of the contact area can be prevented connecting to improved interruption performance.

Moreover, the configuration of the current flow path being straight eliminates bend sections on the main circuit conductors at which electric filed concentrates. This decrease the minimum insulation distance needed within the VCB compartment and reduces the depth dimension of the VCB compartment. Therefore downsizing a C-GIS becomes feasible.

### [BRIEF DESCRIPTION OF DRAWINGS]

Fig. 1 is a schematic vertical sectional view of the C-GIS by the present invention.
Fig. 2 is an enlarged view of the main part of the present invention that illustrates a part of its configuration in a partially-sectioned manner.
Fig. 3 is an explanatory illustration to describe some details of installing the valve in the C-GIS.
Fig. 4(a) is a sectional view of Fig. 3 when viewed toward arrows A-A. Fig. 4(b) is a sectional view for Fig. 3 when viewed toward arrows B-B. Fig. 4(c) is a sectional view for Fig. 2 when viewed toward arrows C-C.

### [BEST MODE FOR CARRYING OUT INVENTION]

### [Embodiment 1]

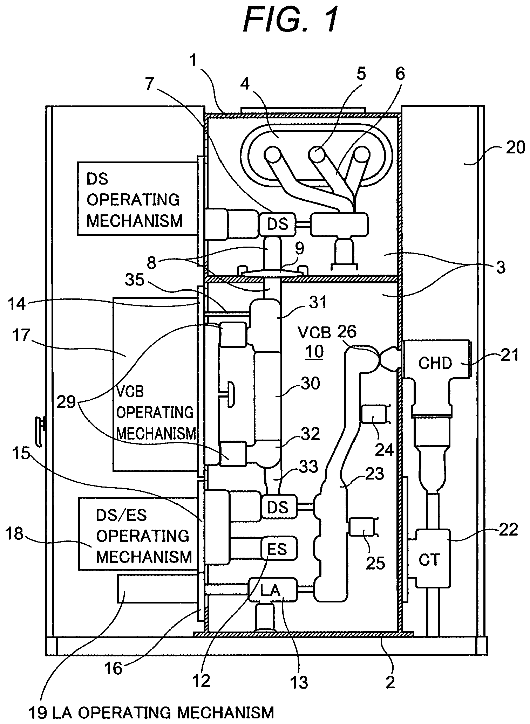

The overall configuration of a C-GIS by the present invention is illustrated in Fig. 1 in which the numeral sign 2 indicates is an VCB compartment and a bus bar compartment 1 is joined with the upper part of the VCB compartment 2. An insulating gas 3 fills the VCB compartment 2 and the bus bar compartment 1. The fronts of the VCB compartment 2 and the bus bar compartment 1 face towards the left side of the page; and likewise the rears of them towards right.

Into the bus bar compartment 1, bus bars 5 for three phases penetrate through a spacer 4 for three phases in a vertical direction to this page so that inside the bus bar compartment 1 is airtight. The bus bars 5 is led into the VCB compartment 2 through main circuit conductor 6, disconnecting switch (DS) 7, and a main circuit conductor 8. The main circuit conductor 8 passes between compartments through an insulating spacer 9 maintaining the airtightness of the bus bar compartment 1 and the VCB compartment 2.

In the VCB compartment 2, a vacuum circuit breaker (VCB) 10, a disconnecting switch (DS) 11, earthing switch (ES) 12, and a line arrestor (LA) 13 are disposed. The interruption section of the vacuum circuit breaker 10 has a valve 30, an upper shielding valve-terminal 31 installed on the upper end of the valve 30, and a lower shielding valve-terminal 32 installed on the lower end of the valve 30.

The upper shielding valve-terminal 31 and the lower shielding valve-terminal 32 are made of metallic material in a hollow circular shape so that concentration of electric field does not occur and are installed on the upper and lower ends of the valve 30 respectively to dispose connection components such as contacts as described below.

The upper shielding valve-terminal 31 and the lower shielding valve-terminal 32 are fixed, maintaining its insulation, on a VCB mounting plate 14 with a supporting insulator 29 to support the valve 30. Although Fig. 1 illustrates the configuration for one-phase, it should be noted that the vacuum circuit breaker 10, the disconnecting switch 11, the earthing switch 12, and the line arrestor 13 are disposed for three-phase configuration in a row vertical to this page at a specified insulation distance interval.

In the front of the VCB compartment 2, mounting access openings are provided to permit mounting various related components. The VCB mounting plate 14, a DS/ES mounting plate 15, and an LA mounting plate 16 are installed so that these equipment shut the mounting access openings in a hermetical manner to maintain airtightness of the VCB compartment 2. In the fronts of these mounting plates 14, 15, and 16, a VCB operating mechanism 17, a DS/ES operating mechanism 18, and a LA operating mechanism 19 are provided respectively.

In the rear of the VCB compartment 2, a cable compartment 20 is provided. A cable head (CHD) 21 and a current transformer (CT) 22 are housed in the cable compartment 20 and are mounted in the rear of the VCB compartment 2.

Each of fixed side contacts (not illustrated) of the disconnecting switch 11, the earthing switch 12, and the line arrestor 13 is connected to a main circuit conductor 23 and fixed on the VCB compartment 2 through insulators 24 and 25. The upper part of the main circuit conductor 23 is connected to a terminal 26 provided on the distal end of the cable head 21.

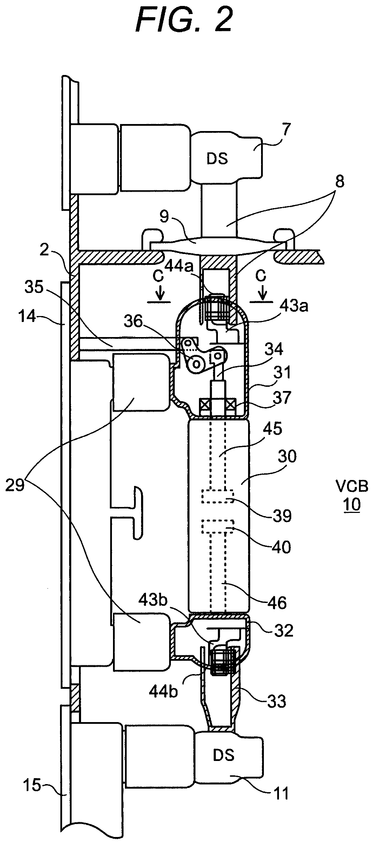

Fig. 2 is an enlarged illustration of the main part of a C-GIS by the present invention. More specifically, what the figure illustrates is the connection configuration of the vacuum circuit breaker 10 and its surroundings using a sectional-view of the upper shielding valve-terminal 31, the lower shielding valve-terminal 32, and the main circuit conductor 33.

The following provides explanations for the constructions of each part. On the axis line of the valve 30, a moving lead 45 and a fixed lead 46 are oppositely arranged. On the lower end of the moving lead 45, a moving electrode 39 is joined; on the upper end of the fixed lead 46, a fixed electrode 40 is joined. The electrodes 39 and 49 are disposed to face each other.

Inside the upper shielding valve-terminal 31, a ring contact 37 that electrically connects the moving lead 45 and the upper shielding valve-terminal 31, a plate-shaped contact 43a, a finger contact 44a, and a link mechanism that drives the moving lead 45 are disposed. The link mechanism has a rod 34, an insulated rod 35, and a conversion lever 36 that inter-connects them.

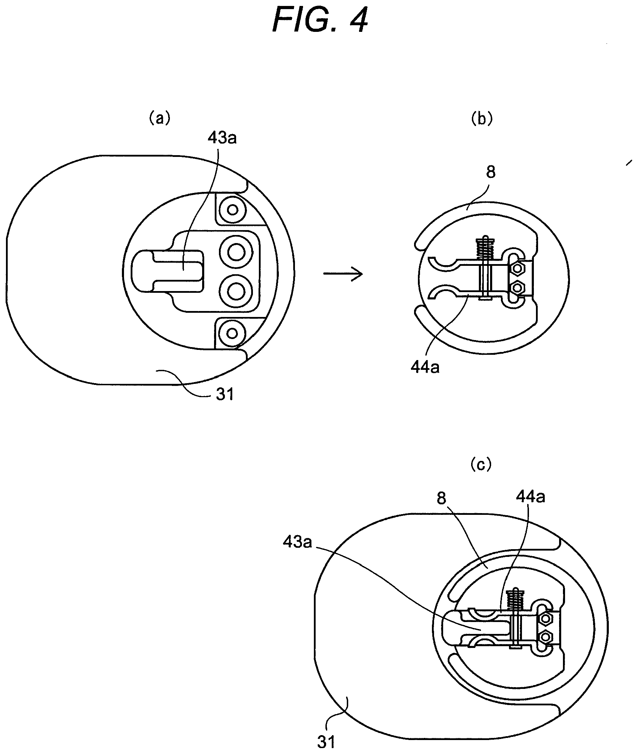

The plate-shaped contact 43a is given connection faces on both the horizontal-sides thereof as illustrated in Fig. 2 and Fig. 4(a) and is fixed on the mounting seat formed in the hollow part of the upper shielding valve-terminal 31 to be electrically connected to the moving lead 45. A plate-shaped contact 43b manufactured likewise is fixed on the mounting seat formed in the hollow part of the lower shielding valve-terminal 32 to be electrically connected to the fixed lead 46.

The finger contact 44a, to or from which the plate-shaped contact 43a connects or parts by the horizontal direction fitting movement, has such a construction that plural contact plates arrayed vertically are made to provide contact pressure with a spring as illustrated in Fig. 2 and Fig. 4(b) so that the connection or disconnection action between the contacts is performed from the side of the VCB compartment. The finger contact 44a, illustrated in Fig. 2 and Fig. 4(b) as an example, is arranged in a hollow portion formed on at least a part of the lower end of the main circuit conductor 8 providing electrical connection thereto being aligned on the line that connects the plate-shaped contacts 43a and 43b. A finger contact 44b is manufactured in a configuration similar to the above and is likewise arranged in a hollow portion formed on at least a part of the upper end of the main circuit conductor 33 providing electrical connection thereto being aligned on the line that connects the plate-shaped contacts 43a and 43b.

The plate-shaped contact 43a is connected to the upper shielding valve-terminal 31 and its longitudinal axis line is aligned nearly on the extension of the axes lines of the moving lead 45 and the fixed lead 46 disposed in the valve 40. The finger contact 44a, which joints in the plate-shaped contact 43a, is connected to the lower end of the main circuit conductor 8. Further, the upper end of the main circuit conductor 8 is connected to the disconnecting switch 7. And, the main circuit conductor 8 is routed straight so that the axis line thereof is aligned nearly on the extension of the axes lines of the moving lead 45 and the fixed lead 46.

In the lower shielding valve-terminal 32, devices of the same configuration to the plate-shaped contact 32a and the finger contact 44a disposed in the upper shielding valve-terminal 31 are disposed.

That is, the plate-shaped contact 43b is connected to the lower shielding valve-terminal 32 and its longitudinal axis line is aligned nearly on the extension of the axes lines of the moving lead 45 and the fixed lead 46. The finger contact 44b, which fits to the plate-shaped contact 43b, is connected to the upper end of the main circuit conductor 33. Further, the lower end of the main circuit conductor 33 is connected to the disconnecting switch 11. The main circuit conductor 33 is likewise routed straight so that the axis line thereof will be aligned nearly on the extension of the axes lines of the moving lead 45 and the fixed lead 46.

As stated above, the current flow path from the disconnecting switch 7 to the disconnecting switch 11, via the upper shielding valve-terminal 31, the valve 30, and the lower shielding valve-terminal 32, is formed straight so as to align nearly on the extension of the axes lines of the moving lead 45 and the fixed lead 46 in the valve 30.

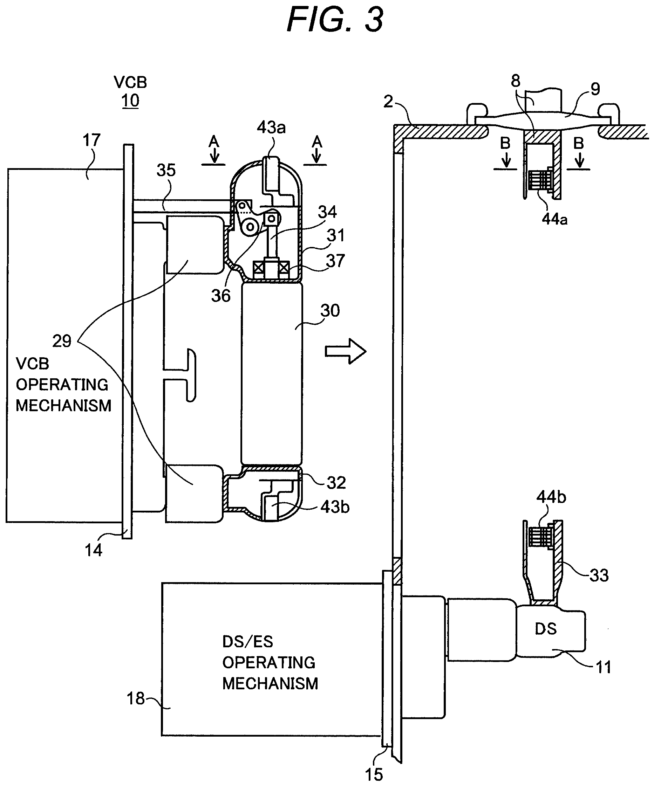

In mounting the vacuum circuit breaker 10 in the VCB compartment 2, moving the vacuum circuit breaker 10 horizontally from left to right in Fig. 3 permits the vacuum circuit breaker 10 to be mounted in the VCB compartment 2 because the mounting access openings are provided in the front of the VCB compartment 2 as Fig. 3 explains. The openings are provided on a part of the right side of each of the upper shielding valve-terminal 31 and the lower shielding valve-terminal 32 and on a part of the left side of each of the main circuit conductors 8 and 33.

Thereby, the plate-shaped contacts 43a and 43b joint with the finger contacts 44a and 44b with a horizontal-sliding fitting motion, respectively. On full completion of joints between the plate-shaped contacts 43a and 43b and the finger contacts 44a and 44b, they become a fully-jointed state illustrated in Fig. 2. Under this state, all the electrical connections among contacts including end portions of the main circuit conductors 8 and 33 are housed within the upper shielding valve-terminal 31 and the lower shielding valve-terminal 32 to become an electrically-shielded state.

To mount the vacuum circuit breaker 10 in the VCB compartment 2, the upper shielding valve-terminal 31 is moved to the left as the arrow in Fig. 4(a) indicates. This movement fits the plate-shaped contact 43a provided therein in the finger contact 44a illustrated in Fig. 4(b) and then their joints are established as illustrated in Fig. 4(c). At the time of completion of the joint, the upper shielding valve-terminal 31 works as a shroud that envelops the main circuit conductor 8 including connecting portions on plate-shaped contacts 43a and 44a.

Next, the workings of the present invention are explained. Fig. 2 illustrates the moving electrode 39 and the fixed electrode 40 in the circuit-open state. While usual operation, these electrodes 39 and 40 are in the circuit-close state under predetermined pressure and current flows from top down to bottom in Fig. 2. However, if a high current such as a fault current flows, the VCB operating mechanism 17 works first and then the link mechanism parts the moving electrode 39 from the fixed electrode 40. Immediately after the electrode parting, arc appears between the electrodes 39 and 40 and lasts for a certain length of time. In this situation, the electromagnetic force works on the arc only leftward in Fig. 2.

The straight disposition of the current flow paths as is in the C-GIS by the present invention reduces the intensity of the electromagnetic force that produces uneven arc distribution by about 20 % compared to conventional structures and accordingly suppresses occurrence of electrode damage attributable to local concentration of arc; further, the tilting of the moving lead 45 caused by electromagnetic force is reduced. Thereby, electrode damage for which the one-side contacting of the electrodes 39 and 40 are responsible and the reduction of the contact area can be prevented connecting to improved interruption performance.

Further, the current flow path from the disconnecting switch 7 to the disconnecting switch 11 being formed straight so as to align nearly on the extension of the axes lines of the moving lead 45 and the fixed lead 46 eliminates bends on the main circuit conductors 8 and 33 on which an extreme concentration of electric filed will occur. This decreases the minimum insulation distance needed within the VCB compartment 2 and reduces the depth dimension of the VCB compartment 2. Therefore downsizing a C-GIS becomes feasible.

### [INDUSTRIAL APPLICABILITY]

The C-GIS by the present invention is applicable to substations or distribution plants and therefore considerably effective in downsizing the related installations as a whole.

## Claims

1. A cubicle-type gas insulated switchgear comprising:
a bus bar compartment (1) and an VCB compartment (2) vertically joined to each other, each of which is filled with insulating gas (3);
a vacuum valve (30) disposed vertically in the VCB compartment (2);
plate-shaped contacts (43a, 43b) connected to each of the upper and the lower ends of the vacuum valve (30) severally;
main circuit conductors (8, 33) disposed in the VCB compartment (2), wherein each end of the main circuit conductors (8, 33) has a finger contact (44a, 44b) to make fit-connection correspondingly with the respective plate-shaped contact (43a, 43b),
wherein each of the plate-shaped contacts (43a, 43b) and each of the finger contacts (44a, 44b) are disposed on the line that connects between the plate-shaped contacts (43a, 43b) to permit connecting and disconnecting with a lateral operation in a first direction perpendicular to the vertical direction, and
each of the longitudinal axes lines of the plate-shaped contacts (43a, 43b) and of the finger contacts (44a, 44b) and of the main circuit conductors (8, 33) are aligned nearly on the extension line of axes of the moving lead (45) and the fixed lead (46) disposed in the vacuum valve (30),
**characterised in that**
disconnecting switches (7, 11) are disposed in the bus bar compartment (1) and the equipment respectively, wherein each of the disconnecting switches (7, 11) is connected to each of the main circuit conductors (8, 33) severally, and
said disconnecting switches (7, 11) and a vacuum circuit breaker (10) having said valve (30) are disposed for each of three phases in a row extending in a second direction which is perpendicular to said first direction and said vertical direction.

2. The cubicle-type gas insulated switchgear according to claim 1, wherein
each of the plate-shaped contacts (43a, 43b) is secured severally on an upper shielding valve-terminal (31) and a lower shielding valve-terminal (32) that are installed on the upper and the lower ends of the vacuum valve (30) respectively;
each of the finger contacts (44a, 44b) is connected electrically to each of the respective main circuit conductors (8, 33);
each of the plate-shaped contacts (43a, 43b) and each of the finger contacts (44a, 44b) are disposed so that they position within the upper shielding valve-terminal (31) and within the lower shielding valve-terminal (32) respectively on completion of making fit-connection.

## Patentansprüche

1. Gasisolierte Schaltschrankanordnung mit
einer Sammelschienenkammer (1) und einer VCB-Kammer (2), die vertikal miteinander verbunden und jeweils mit einem Isolationsgas (3) gefüllt sind,
einem Vakuumventil (30), das vertikal in der VCB-Kammer (2) angeordnet ist,
plattenförmigen Kontakten (43a, 43b), die einzeln mit dem oberen und dem unteren Ende des Vakuumventils (30) verbunden sind,
Hauptschaltungsleitern (8, 33), die in der VCB-Kammer (2) angeordnet sind, wobei jedes Ende der Hauptschaltungsleiter (8, 33) einen Fingerkontakt (44a, 44b) aufweist, um eine dem jeweiligen plattenförmigen Kontakt (43a, 43b) entsprechende Passverbindung mit diesem herzustellen,
wobei jeder der plattenförmigen Kontakte (43a, 43b) und jeder der Fingerkontakte (44a, 44b) auf der Linie angeordnet ist, die die plattenförmigen Kontakte (43a, 43b) verbindet, um ein Verbinden und Trennen mit einer Seitwärtsoperation in einer ersten Richtung zu erlauben, die zu der vertikalen Richtung senkrecht steht, und
jede der Längsachslinien der plattenförmigen Kontakte (43a, 43b) und der Fingerkontakte (44a, 44b), sowie der Hauptschaltungsleiter (8, 33) nahezu auf der Verlängerungslinie von Achsen der bewegbaren Leitung (45) und der festen Leitung (46) aufgereiht sind, die in dem Vakuumventil (30) angeordnet sind,
**dadurch gekennzeichnet, dass**
Trennschalter (7, 11) jeweils in der Sammelschienenkammer (1) und der Vorrichtung angeordnet sind, wobei jeder der Trennschalter (7, 11) einzeln mit jedem der Hauptschaltungsleiter (8, 33) verbunden ist, und
die Trennschalter (7, 11) und ein Vakuumleistungsschalter (10) mit dem Ventil (30) für jede von drei Phasen in einer Reihe angeordnet sind, die in einer zweiten Richtung verläuft, die senkrecht zu der ersten Richtung und der vertikalen Richtung steht.

2. Gasisolierte Schaltschrankanordnung nach Anspruch 1, wobei
jeder der plattenförmigen Kontakte (43a, 43b) einzeln auf einem oberen Abschirmventilanschluss (31) und einem unteren Abschirmventilanschluss (32) gesichert ist, die jeweils auf dem oberen und dem unteren Ende des Vakuumventils (30) angebracht sind,
jeder der Fingerkontakte (44a, 44b) elektrisch an jeden der jeweiligen Hauptschaltungsleiter (8, 33) angeschlossen ist,
jeder der plattenförmigen Kontakte (43a, 43b) und jeder der Fingerkontakte (44a, 44b) so angeordnet ist, dass sie bei vollständig hergestellter Passverbindung innerhalb des oberen Abschirmventilanschlusses (31) beziehungsweise innerhalb des unteren Abschirmventilanschlusses (32) positioniert sind.

## Revendications

1. Dispositif de commutateur isolé par un gaz du type à caisson, comprenant :
un compartiment de barre-bus (1) et un compartiment de coupe-circuit à vide (2) verticalement réunis l'un à l'autre, chacun d'entre eux étant rempli par un gaz isolant (3) ;
une vanne à vide (30) disposée verticalement dans le compartiment de coupe-circuit à vide (2) ;
des contacts en forme de plaque (43a, 43b) connectés à chacune des extrémités supérieure et inférieure de la vanne à vide (30) de façon individuelle ;
des conducteurs de circuit principaux (8, 33) disposés dans le compartiment de coupe-circuit à vide (2), chaque extrémité des conducteurs de circuit principaux (8, 33) comportant un contact de doigt (44a, 44b) de façon à établir une connexion d'adaptation de façon correspondante avec le contact en forme de plaque respectif (43a, 43b),
dans lequel chacun des contacts en forme de plaque (43a, 43b) et chacun des contacts de doigt (44a, 44b) sont disposés sur la ligne qui effectue une connexion entre les contacts en forme de plaque (43a, 43b) de façon à permettre une connexion et une déconnexion avec une opération latérale dans une première direction perpendiculaire à la direction verticale, et
chacune des lignes d'axes longitudinaux des contacts en forme de plaque (43a, 43b) et des contacts de doigt (44a, 44b) et des conducteurs de circuit principaux (8, 33) sont alignées quasiment sur la ligne d'extension d'axes du conducteur mobile (45) et du conducteur fixe (46) disposés dans la vanne à vide (30),
**caractérisé en ce que** :
des commutateurs de déconnexion (7, 11) sont disposés dans le compartiment de barre-bus (1) et l'équipement, respectivement, chacun des commutateurs de déconnexion (7, 11) étant connecté à chacun des conducteurs de circuit principaux (8, 33) de façon individuelle, et
lesdits commutateurs de déconnexion (7, 11) et un coupe-circuit à vide (10) comportant ladite vanne (30) sont disposés pour chacune de trois phases dans une rangée s'étendant dans une deuxième direction qui est perpendiculaire à ladite première direction et à ladite direction verticale.

2. Dispositif de commutateur isolé par un gaz du type à caisson selon la revendication 1, dans lequel :
chacun des contacts en forme de plaque (43a, 43b) est fixé de façon individuelle sur un terminal de vanne de blindage supérieur (31) et un terminal de vanne de blindage inférieur (32), qui sont installés sur les extrémités supérieure et inférieure de la vanne à vide (30), respectivement ;
chacun des contacts de doigt (44a, 44b) est électriquement connecté à chacun des conducteurs de circuit principaux respectifs (8, 33) ;
chacun des contacts en forme de plaque (43a, 43b) et chacun des contacts de doigt (44a, 44b) sont disposés de telle sorte qu'ils se positionnent à l'intérieur du terminal de vanne de blindage supérieur (31) et à l'intérieur du terminal de vanne de blindage inférieur (32), respectivement, lors de l'achèvement de la réalisation de la connexion à adaptation.
